# EUROPEAN PATENT APPLICATION

(11) **EP 1 414 205 A1**
(43) Date of publication of application: **28.04.2004**
(21) Application number: 02360295.6
(22) Date of filing: 24.10.2002
(51) Int. Cl.: H04L 12/58

(54) **Method and device for tracing of electronic mail**

(71) Applicant: ALCATEL, 75008 Paris (FR)
(72) Inventor: Weik, Hartmut, 70195 Stuttgart (DE); Lautenschlager, Wolfgang, 71287 Weissach (DE)
(74) Representative: Urlichs, Stefan, Dipl.-Phys.

(57) **Abstract**

A mail-trace service is implemented in the mail tools of the users and/or the mail servers of the network. The mail-trace service is activated by setting a predefined flag in the mail message header. When a received electronic mail with activated mail-trace flag is forwarded over the network to a third party, the forwarding mail tool or mail server automatically notifies the originator of the electronic mail of this forwarding action. Preferably, each electronic mail contains a unique message ID that is used to notify the originator and that serves to identify the mail

## Description

### Field of the Invention

The present invention relates to the field of data communications and more particularly to a method of tracing distribution of electronic mails over a data communication network like the worldwide Internet.

### Background of the Invention

The term electronic mail (often abbreviated as "email") refers to text messages with our without attachments that could be sent among computers through a network. The syntax for such text messages is specified in RFC 822. According to this, an electronic mail consists of envelope and content. The envelope contains whatever information is needed to accomplish transmission while the contents compose the object(s) to be delivered to the recipient. The protocol that is usually used for electronic mail is known as the Simple Mail Transfer Protocol (SMTP), which is specified in RFC 821. Requirements for Internet Hosts supporting electronic mail are specified in RFC 1123 section 5.

An email is transported through a computer network by means of mail servers. A number of users are assigned to a mail server that keeps a mailbox for each user. The mail server stores the emails destined for a particular user in the user's mailbox until the user connects to the mail server and collects his emails. In other words, a user needs to connect to his mail server in order to pick up his emails from his mailbox and to post new emails. The mail server cares for the mail transport through the computer network to the mail server(s) of the recipient(s).

In order to inform the originator of an electronic mail, that his mail has been received, systems have been developed, where the recipient's mail server or mail tool automatically acknowledges receipt of the email by an new return email, so that the sender will known that and when the email has been received or even read by a human recipient.

Electronic mail service allows very simple and fast distribution of electronic information. For example, a recipient of an electronic mail can easily forward this mail or an attachment thereof to a third party or even to an entire group of third party users. Modern mail tools support this kind of information distribution with effective features. Using a modern email tool, a user can forward an email by simply clicking on the forward button of his mail tool. Moreover, a user can also set an automatic forward on his mailbox, i.e., he can automatically redirect all or certain mails destined for him to a different mail address.

On the other hand, for privacy reasons it may be useful for the originator of an email to know when and to whom his email has been forwarded and which users hence may store a copy of the email.

It is therefore an object of the present invention to provide a method and corresponding server and mail tool which allows an originator of an electronic mail to trace distribution of his mail over a data communication network.

### Summary of the Invention

These and other objects that appear below are achieved by a new mail-trace service that is implemented in the mail tools of the users and/or the mail servers of the network. The mail-trace service is activated by setting a predefined flag in the mail message header. When a received electronic mail with activated mail-trace flag is forwarded over the network to a third party, the forwarding mail tool or mail server automatically notifies the originator of the electronic mail of this forwarding action. Preferably, each electronic mail contains a unique message ID that is used to notify the originator and that serves to identify the mail.

The invention can be realised by simple adaptation of existing protocols.

### Brief Description of the Drawings

A preferred embodiment of the present invention will now be described with reference to the accompanying drawings in which
- figure 1: shows a computer network with various mail servers and users connected thereto;
- figure 2: shows the extension of the mail header according to the invention;
- figure 3: shows the acknowledgment sent back by a forwarding mail server;
- figure 4: shows how a user is notified about a forwarding action using the example network from figure 1; and
- figure 5: shows nested mail-tracing in a preferred embodiment, i.e., notification in the case of an email twice forwarded.

### Detailed Description of the Invention

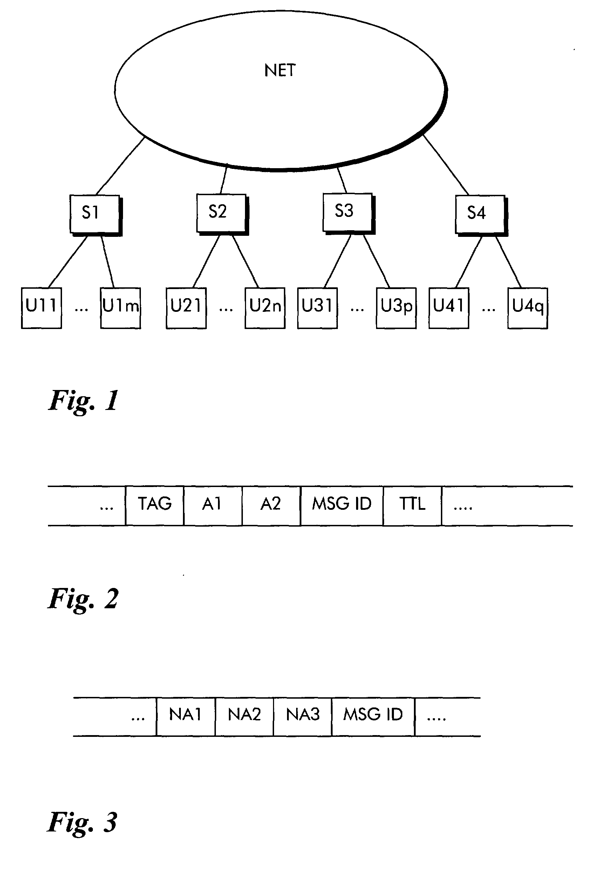

An example network NET is shown in figure 1. Four mail servers S1-S4 connect to the network. Each server serves a number of subscribers U11-U1m, U21-U2n, U31-U3p, and U41-U4q. Each subscriber has a unique mail address, typically in the form of <user_name@mail_server.domain>. Each subscriber can send to and receive from each other subscriber electronic mails. The mail servers care for the transport of the electronic mails through the network. The subscribers do not need to be permanently connected to the mail servers but can also connect from time to time to collect their electronic mails from the server and post new mails. The network NET is a computer network such as an Intranet or the worldwide Internet or any other type of data communication network.

It is now assumed (without restriction to generality) that subscriber U11 connected to mail server S1 sends an electronic mail to subscriber U21 connected to mail server S2. Subscriber U11 is thus the originator of the electronic mail. Transport and delivery of the mail is as usual: Subscriber U11 connects to his mail server S1 and posts the mail. Mail server S1 determines from the destination address that the mail needs to be send to mail server S2. Mail server S2 detects from the destination address that the mail is destined for subscriber U21 and drops the mail into subscriber U21's mailbox. Some time later, subscriber U21 connects to his mail server S2 and collects the mails including subscriber U11's mail from his mailbox.

It is now assumed that subscriber U21 intends to forward a copy of this electronic mail to user U41. However, it may be in the interest of the originator U11 to know who else than the original recipient U21 receives a copy of his email. Therefore U11 has activated the mail-trace service according to the present invention. The mail-trace service is a service provided by either the mail-servers or the mail tools of the subscribers as such to automatically notify the originator of a email about any forwarding his email undergoes.

The implementation of the invention is preferably based on an extension of the existing email protocol and email message format, preferably the one defined by RFC 822 and RFC 1123 section 5. In addition to the existing message header (or mail envelope), the fields shown in figure 2 are introduced. Some of them are optional and may be discarded or left empty. The new fields contain:
- a tag field TAG of at least two bits for sending a mail-trace request, i.e., to activate the mail-trace service;
- a first address field A1 for sending the address of the originator;
- a second optional address field A2 for sending the address of the last subscriber, who has requested trace information;
- a field MSG ID for a unique message identifier; and
- an optional field TTL for a maximum number of hops to trace back.

The tag field is used to activate mail-tracing. When activated, the field TAG contains the trace request, i.e., the request to notify the originator of the electronic mail of any forwarding action. Field A1 contains the address of the originator, which is in the example the address of subscriber U11. The message ID is a unique identifier that is used to associate message and corresponding notification. The optional TTL (Time-to-Live) field defines how may forwarding steps will be traced. As an alternative to the traceable number of forwarding actions, a date can also be specified in this field.

As explained above, there exist two alternative implementations of the mail-trace service on the recipient's side. Either the mail-trace service can be performed autonomously by the mail tool of the recipient or the mail server of the recipient can perform the mail-trace service on its own. In a third hybrid approach, mail tool and mail server can cooperate to provide the mail-trace service. These alternative implementations will be explained in the following.

The mail tool of a subscriber is also referred to as a 'mailer'. A mailer is a computer program that allows a user to read and edit emails on his computer and to communicate with the mail server to collect and post emails. Most mailer programs also offer advanced functions such as forward, reply, print, store, and others and also support email attachments such as scanned pictures, word documents or any other type of computer files.

As the mailer is the central instance that handles the emails and provides the forwarding function, implementation of the mail-trace service in the mailer program is simple. If the human user selects the forwarding function for a given electronic mail, the mailer checks whether the mail-trace function is activated for this email by simply checking its TAG field. If mail-tracing is activated, the mailer automatically sends a notification to the originator of the forwarded email, i.e. to the address specified in address field A1. In order to identify the forwarded email in the notification, the message ID specified in MSG ID field is used. Alternatively, the mailer can simply send a blind copy of the forwarded email to the originator. The blind copy then serves as notification of the forwarding action.

Preferably, the notification has the format shown in figure 3. It contains the message ID from the MSG ID field of the forwarded email, the address NA1 of the originator and the own address NA3 of the recipient who has forwarded the email. Optionally, the notification can further contain the address NA2 of the preceding recipient in the distribution list who has activated mail-tracing. The message header of the notification thus contains the fields shown in figure 3: the MSG ID field and the three address fields NA1 -NA3 for the three above addresses.

In an alternative embodiment, the mail-trace service can be implemented in the mail-server. A mail server that receives an electronic mail for one of its associated subscribers, checks the TAG field of the email. If the check determines that the mail-trace service is activated for this email, the mail server stores the trace request using the MSG ID parameter from the received email as well as the address of the originator of the email. If later on, the subscriber forwards this email, the mail server checks by means of the message ID whether the mail is a forwarded mail that needs to be traced and if so, sends a corresponding notification to the origin address stored for this message ID.

This requires, however, that the mailer of the subscribers leaves the message ID untouched, i.e., does not alter the message ID. As an alternative to the use of message IDs to identify forwarded emails, the mail server can also determine any kind of signature or characteristic from the email that can serve for identification purposes. This can be for example a hash code from the contents of the mail or a predefined identification code previously appended to the email.

However, what is important in this embodiment is, that the mail server of the recipient, who forwards the email, identifies the email as a forwarded email that needs to be traced and if so, sends a notification to the originator of the email.

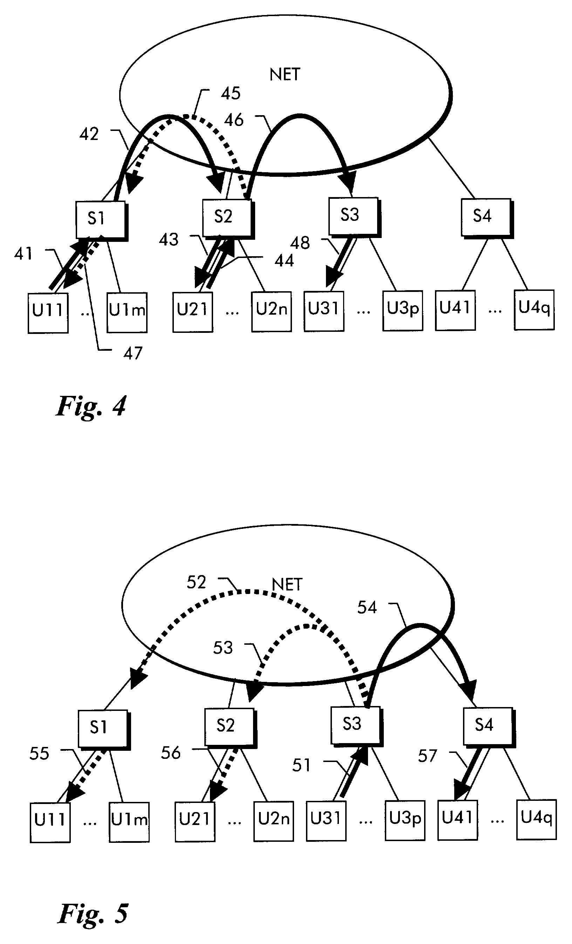

An example of mail-tracing is shown in figure 4: U11 creates an email for U21. The email 41 is delivered to mail server S1 that transports the email 42 via network NET to mail server S2. S2 detects that mail-tracing is activated for the email, stores the trace request together with the mail ID and places the email into U21's mailbox. When U21 checks his mailbox at S21, he receives the email 43 from U11. Some time later, U21 decides to forward the email from U11 to U31. U21 thus creates a copy 44 of the email, specifies therein U31's mail address, and sends this copy to his mail server S2 that is responsible for mail transport. S2 detects by means of the mail ID, that a trace request exists for this email and sends a notification 45 to mail server S1. Then S2 transports the forwarded email 46 to mail server S3. S1 delivers the notification 47 to U11 and S3 delivers the email 48 to U31.

Implementation of the mail-trace service in the mail servers has the advantage that the mail-trace service can also be nested, i.e., a recipient who forwards an email that needs to be traced can himself activate mail-tracing and will thus also receive notifications about further distribution of the email. This is of particular advantage when the forwarding recipient has added additional contents to the electronic mail and wishes to know who else receives this additional contents.

Nested mail-tracing uses the optional second address field A2 to indicate the address of the recipient who has forwarded the email and who is thus also interested in a notification about future forwarding actions. Figure 5 shows an example based on the scenario of figure 4. In figure 4, U21 has himself activated mail-tracing by inserting his mail address into field A2 of forwarded email 34. Server S3 has detected the trace request from received email 36 and stored the request together with the mail ID and the originator addresses A1 and A2.

Now, in figure 5, U31 decides to forward the email to U41. He thus copies the mail and sends it as forwarded mail 51 to his mail server S3. S3 detects by means of the mail ID that a trace request exists for this email and sends a first notification 52 to the originator U11 and a second notification 53 to the last recipient in the distribution list U21. Then S2 transmits the email 44 to mail server S4 that delivers the received email 57 to recipient U41. U11 receives the notification 55 from server S1 and U21 receives the notification 56 from server S2.

If U41 again forwards the email and activates mail tracing, it simply replaces the address in address field A2 by its own address. The receiving server may then send him a notification and his server can check whether a trace request exists and in this case copy the notification to the previous recipient in the distribution list, i.e., U31 at S3.

In general, according to the invention, each server Sx that receives an email with the tag field TAG set, stores the request and if the corresponding mail is forwarded, sends a notification to the originator, i.e., server S1 in the example, and to the last server which has forwarded the email, i.e., S2 to S1, S3 to S2, and S4 to S3. A server Sx that receives a notification, checks whether a trace request from a preceding mail server exists and if so forwards the received notification. This is an iterative procedure. The previous last server in the distribution list, i.e., S2 in the example, may forward the notification to the last one but does not need so because the last one, i.e., S1 in the example, has already received a direct notification.

However, if the time-to-live field is used, the forwarding of notifications stops when the time-to-live attribute has expired. If, for example the attribute indicates four "hops", the fifth server in the distribution list will notsend a notification back to the originator anymore, because the attribute has expired. As an alternative, if the time-to-live field indicates three days, the originator will not be notified about forwarding actions that are more than three days after delivery of the original email.

It is very advantageous in the above embodiment, that each mail server must store only one set of data for each email to be traced. Furthermore, only those mail servers in reverse direction are involved that have the mail-tracing function activated.

In another improvement of the invention, the notification is not send directly to the origination address of the subscriber but received notifications are stored by the mail server of the originating subscriber. The mail server can then prepare a kind of report about all notifications received for a particular mail. This report can be in the form of a list or a tree. The subscriber can request from time to time the report from the mail server and thus has a clearly structured presentation about the distribution of his mail, i.e., who else that the original recipient meanwhile stores a copy of his mail. This structured presentation of the received notifications can also be prepared by the mailer of the subscriber rather than his mail server.

Having understood the principles and concepts described above, those skilled in the art will appreciate that the invention is not limited to the above described embodiments but that various modifications to the invention can be made. For example, instead of two address fields A1 and A2, one origin address field will also be sufficient. In this case, the mail server of the recipient who forwards the email, will replace the address in field A1 by its own address. If the mail server receives a notification, it checks by means of the unique mail ID whether a trace request exists for this email and if so, forwards the notification to the originator.

The invention can also be applied to documents rather than emails. For example the header of Word documents can be amended with mail-trace TAG field, originator address field and document ID. With the same principles as above, the same effect can be achieved as with electronic mail.

## Claims

1. A method of tracing distribution of an electronic mail over a data communication network, said method comprising the steps of:
- receiving an electronic mail comprising a trace request from the originator of the electronic mail;
- forwarding of said electronic mail over the network to a third addressee; and
- automatically notifying the originator of the electronic mail about the forwarding step.

2. A method according to claim 1, wherein said electronic mail contains a unique identifier which is used to notify the originator about the forwarding step.

3. A method according to claim 1, further comprising the steps of storing at the recipient's side trace requests of received electronic mails and comparing for an electronic mail to be forwarded whether a trace request exists for this mail and performing said notifying step when said comparison matches.

4. A method according to claim 1, wherein said notification step comprises sending back a first notification to the originator and sending back a second notification to the preceding recipient in the distribution list of the electronic mail.

5. A method according to claim 1, further comprising the steps of specifying within the electronic mail a time-to-live attribute and ignoring said trace request after said time-to-live attribute has expired.

6. A method according to claim 1, wherein said electronic mail comprises, preferably as part of its envelope, a field for the trace request, a first address field for the origination address, and a field for a unique identifier.

7. A method according to claim 6, wherein said electronic mail comprises a second address field for the address of the preceding recipient and a field for a time-to-live attribute.

8. A method according to claim 1, wherein said notification comprises a field for a unique identifier specified in the electronic mail, a first address field for the origination address, a second address field for the address of the preceding server, and a third address field for the address of the server sending the notification.

9. A mail server for delivering and transporting electronic mails in a data communication network, said server being adapted to check whether a trace request is specified in a received electronic mail and if so, to store the trace request, said server being further adapted to check whether an electronic mail to be transported via said network is a forwarded electronic mail for which the mails server has stored a trace request and if so to send a notification to the originator of the forwarded electronic mail.

10. A mail tool for generating electronic mails and sending these through a data communication network, said tool being programmed and adapted to specify on user interaction a trace request within the electronic mail, said trace request requesting potential recipients to notify the originator of any forwarding of said electronic mail.

11. A mail tool according to claim 10, which is further adapted to enable forwarding of a received electronic mail and to check whether a trace request is specified in the electronic mail to be forwarded and if so, to send a notification to the originator of the forwarded electronic mail.
